(19) Europäisches Patentamt / European Patent Office / Office européen des brevets

(11) **EP 3 401 709 A1**

(12) **EUROPEAN PATENT APPLICATION**

(43) Date of publication:
14.11.2018 Bulletin 2018/46

(51) Int Cl.:
*G01W 1/02* *(2006.01)*

(21) Application number: 18171608.5

(22) Date of filing: 09.05.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 09.05.2017 IT 201700049747

(71) Applicant: **Amigo S.R.L.**
**00196 Roma (IT)**

(72) Inventors:
• PETITTA, Roberto
**00196 ROMA (IT)**
• CALMANTI, Giovanni
**00196 ROMA (IT)**

(74) Representative: **Mulas, Chiara et al**
**Barzanò & Zanardo Roma S.p.A.**
**Via Piemonte, 26**
**00187 Roma (IT)**

(54) **METHOD FOR DETERMINING THE PRESENCE OF METEOROLOGICAL PRECIPITATIONS**

(57) The present invention relates to a method and a system for determining the presence of meteorological precipitations in an area of the earth's surface, based on the detection of variations in the power of a radio signal emitted by an emitter of a mobile radio network and received by one or more receivers located in said area.

Fig. 2

## Description

The present invention relates to a method and system for determining the presence of meteorological precipitations.

In particular, the present invention relates to a method and to a system for determining a surface precipitation index, referring to an area of the earth's surface, by measuring the power of a radio signal received by one or more receivers located in said area, which is attenuated by the atmosphere in which said radio signal is propagated.

## State of the Art

The transmission of information by means of electromagnetic waves (radio, microwaves) has constituted one of the most important factors of development in the past and present centuries (TV, radio, mobile phones, mobile telecommunications devices). Typically, telecommunications systems imply the use of electromagnetic spectrum bands characterised by low atmospheric attenuation coefficients, such as to optimise the transmission distance.

In contrast, many systems for measuring ambient parameters (temperature, presence of hydrometeors, aerosol and particulate concentrations) are designed to emit and/or receive electromagnetic radiation with wavelengths specifically selected for the purpose of activating specific interactions (absorption, reflection, polarisation etc.), such as to enable the measurement of interest (e.g. radar, lidar).

Some techniques have recently been introduced relating to the possibility of using electromagnetic waves, initially generated for specific purposes in the telecommunications sector, for measuring the intensity of rainfall (Leijnse et al., 2007, Overeem et al., 2011, Chwala et al., 2012, Rayitsfeld et al., 2012).

These techniques are based on the phenomenon of absorption of electromagnetic radiation by raindrops (Olsen et al., 1978), which has significant effects at frequencies above 5 GHz.

Moreover, these techniques are based exclusively on the use of radio signals emitted by one or more emitters belonging to a commercial telephone network (backhaul links), which typically have frequencies above 20 GHz.

A system and method for identifying a hydrometeor, which uses such techniques, is described in application WO 2013/124853.

The disadvantages of such techniques include the high cost of the infrastructure, the difficulty of positioning receivers in the points in which it is necessary to position them, due to their bulkiness and social problems, and the need to know the proprietary data of telephone operators relating to the signals emitted and received by the receivers.

It is an object of the present invention to provide a method and a system to overcome such disadvantages.

The subject matter of the present invention is a method for determining the presence of meteorological precipitations in an area of the earth's surface, comprising the following steps:

A. acquiring, in predetermined instants of time $t_K$, with k=1,...,M, where M is a positive integer, via one or more fixed and/or mobile receivers, the power $I_R$ of a radio signal emitted into the atmosphere by an emitter of a mobile radio network, wherein said radio signal emitted by said emitter has a frequency comprised between 0.5 and 5 GHz and a transmitted power $I_0$, so as to obtain for each receiver a respective sequence of received power values $I_{R11}$, $I_{R12...}$ $I_{R1M}$, $I_{R21}$, $I_{R12...}I_{R1M}$,... $I_{RN1}$, $I_{RN2...}I_{RNM}$; said received power $I_R$ being a power attenuated by said atmosphere relative to said transmitted power $I_0$,

B. acquiring the data relating to the position of said emitter and to the position of said one or more receivers;

c. acquiring, by means of one or more weather stations, meteorological data relating to the meteorological precipitations over said area in a predetermined first reference time window in the absence of meteorological precipitations and in a predetermined second reference time window in the presence of meteorological precipitations;

D. sending, via a data network, the data acquired in steps A, B, C to a processing unit;

E. calculating for each receiver, by means of said processing unit, a respective power threshold value $S_1, S_{2...} S_N$ on the basis of a respective sequence of reference power values $I_{R110}, I_{R120...}I_{R1M0}$, $I_{R210}, I_{R120...}I_{R1M0}$,... $I_{RN10}, I_{RN20...}I_{RNM0}$ of said radio signal received by said one or more receivers in said predetermined first reference time window,

F. comparing each threshold value $S_1, S_{2...} S_N$ with the mean value $\overline{I_{R1}}$, $\overline{I_{R2...}} \overline{I_{RN}}$ of a respective sequence of received power values $I_{R11}$, $I_{R12...}$ $I_{R1M}$, $I_{R21}$, $I_{R12...}I_{R1M}$,... $I_{RN1}$, $I_{RN2...}I_{RNM}$ in a predetermined time window,

G. if one or more mean values $\overline{I_{R1}}$, $\overline{I_{R2}} ... \overline{I_{RN}}$ are lower than the respective threshold $S_1, S_{2...} S_N$, calculating, by means of said processing unit, a respective surface precipitation index $p_1$, $p_{2...} p_N$ as a function of said one or more mean values $\overline{I_{R1}}$, $\overline{I_{R2}} ... \overline{I_{RN}}$ lower than the respective threshold $S_1, S_{2...} S_N$ and of said meteorological data acquired in said predetermined second reference time window.

In particular, according to the invention, each power threshold value $S_1, S_{2...} S_N$ can be the mean value $\overline{I_{R10}}$, $\overline{I_{R20}} ... \overline{I_{RN0}}$ of the values of a respective sequence of reference power values $I_{R110}, I_{R120...}I_{R1M0}$,

$I_{R210}, I_{R220}...I_{R2M0},...I_{RN10}, I_{RN20}...I_{RNM0}.$

Alternatively, according to the invention, each power threshold value $S_1, S_2... S_N$ can be the mean value $\overline{I_{R10}}, \overline{I_{R20}}...\overline{I_{RN0}}$ of the values of a respective sequence of reference power values $I_{R110}, I_{R120}...I_{R1M0}, I_{R210}, I_{R220}...I_{R2M0},....I_{RN10}, I_{RN20}...I_{RNM0}$ plus or minus a respective predetermined error; each predetermined error preferably being the standard deviation of a respective sequence of reference power values $I_{R110}, I_{R120}...I_{R1M0}, I_{R210}, I_{R220}...I_{R2M0}, ...I_{RN10}, I_{RN20}...I_{RNM0}.$

Again according to the invention, each surface precipitation index $p_1, p_2...p_N$ can be calculated according to the expression:

$$p = \alpha * \overline{I_R} + \beta \text{ or } p = \gamma * \log(\overline{I_R}) + \delta$$

where

$\alpha, \beta$, can be respectively a first empirical parameter and a second empirical parameter, obtained from a linear regression between the meteorological data acquired in said predetermined second reference time window and the mean value $\overline{I_{R1}'}, \overline{I_{R2}'}...\overline{I_{RN}'}$ of a respective sequence of received power values $I_{R11}', I_{R12}'...I_{R1M}', I_{R21}', I_{R12}'...I_{R1M}',...I_{RN1}', I_{RN2}'...I_{RNM}'$, acquired in said predetermined second reference time window;

$\gamma$ and $\delta$ can be respectively a third empirical parameter and a fourth empirical parameter, obtained from a linear regression between the logarithm of the meteorological data acquired in said predetermined second reference time window and the mean value $\overline{I_{R1}'}, \overline{I_{R2}'}...\overline{I_{RN}'}$ of a respective sequence of received power values $I_{R11}', I_{R12}'...I_{R1M}', I_{R21}', I_{R12}'...I_{R1M}',...I_{RN1}', I_{RN2}'...I_{RNM}'$, acquired in said predetermined second reference time window,

so that

for a first receiver

$$p_1 = \alpha_1 * \overline{I_{R1}} + \beta_1$$

for a second receiver

$$p_2 = \alpha_2 * \overline{I_{R2}} + \beta_2$$

for the nth receiver

$$p_N = \alpha_N * \overline{I_{RN}} + \beta_N$$

or

for a first receiver

$$p_1 = \gamma_1 * \log(\overline{I_{R1}}) + \delta_1$$

for a second receiver

$$p_2 = \gamma_2 * \log(\overline{I_{R2}}) + \delta_2$$

...

for the nth receiver

$$p_N = \gamma_N * \log(\overline{I_{RN}}) + \delta_N.$$

Again according to the invention, the data of steps A to C can be acquired by a plurality of mobile receivers and by said one or more weather stations, located in a zone with an extent of less than 1000 m². Additionally, according to the invention, said predetermined first reference time window and said predetermined second reference time window can have, respectively, a duration greater than or equal to 2 days, preferably 5 days.

Preferably, according to the invention, said predetermined time window can have a duration greater than or equal to 6 hours, preferably 24 hours. Moreover, according to the invention, with reference to step A, the time interval between an instant $t_K$ and a subsequent instant of time $t_{K+1}$ can be less than 5 minutes, preferably less than 1 minute.

Again according to the invention, said processing unit can be configured to compute a map of meteorological precipitations on the basis of the values of the surface precipitation indices $p_1, p_2...p_N$ calculated in step G and on the basis of the position data acquired in step B.

Finally, according to the invention, the frequency of said radio signal can be comprised between 0.5 and 2.5 GHz.

The present invention also relates to a computer program, comprising code means configured so that, when run on a computer, they perform steps E to G of the method indicated above.

Furthermore, the present invention relates to a system for determining the presence of meteorological precipitations in an area of the earth's surface, comprising:

- a processing unit,
- one or more fixed and/or mobile receivers, each of which is configured to:

  ○ receive a radio signal emitted into the atmosphere by an emitter of a mobile radio network; said radio signal being emitted by said emitter with a frequency comprised between 0.5 and 5GHz and a transmitted power $I_0$,
  ○ determine a respective power $I_R$ received by each receiver, wherein each received power $I_R$ is a power that is attenuated compared to said transmitted power $I_0$,

∘ communicate with said processing unit,

- one or more weather stations, each of which is configured to acquire meteorological data relating to said area and send said data to said processing unit;

wherein:

- each receiver is configured to acquire the power $I_R$ of said radio signal and send the values of said received power to said processing unit, together with position data of each receiver;
- said processing unit is configured to perform steps E to G of the aforesaid method.

## Detailed description of the invention

### List of figures

The invention will now be described by way of illustration, but not by way of limitation, with particular reference to the drawings in the appended figures, in which:

- figure 1 shows the electromagnetic waves emitted by an antenna or emitter of a mobile radio network and received by a receiver after having passed through an atmospheric medium in which raindrops are present (i.e. atmosphere with the presence of rain), which scatters said electromagnetic waves and attenuates their power compared to what the receiver would receive in the absence of the raindrops in said atmospheric medium;
- figure 2 is a schematic view of an embodiment of the system for measuring a surface precipitation index according to the invention;
- figure 3A shows the daily mean power values of the radio signal received by a receiver belonging to the system according to the invention,
- figure 3B shows the daily mean values of meteorological precipitations measured by a rain gauge.

It is specified here that elements of different embodiments can be combined together to provide further embodiments without limits while abiding by the technical concept of the invention, as the person of average skill in the art will understand without problems from what is described.

Moreover, the present description makes reference to the prior art for its implementation as regards the detailed features that are not described, such as, for example elements of minor importance usually used in the prior art in solutions of the same type.

When an element is introduced, it is always understood that it may be "at least one" or "one or more".

When a series of elements or features is listed in this description, it is understood that the finding according to the invention "comprises" or alternatively "is composed of" such elements.

## Scattering of electromagnetic waves in the atmosphere

The transmission of a radio signal emitted by an antenna or emitter of a mobile radio network in order to be received by one or more receivers (which may be fixed or mobile receivers, in the latter case, for example, mobile phones or mobile telecommunication devices) presently takes place at frequencies comprised between 0.5 and 5 GHz.

At these frequencies, the absorption due to the interaction between the electromagnetic waves and the atmosphere is nearly constant and weakly dependent on the characteristics of the atmosphere itself (temperature, humidity, presence of rain or snow).

However, the scattering of electromagnetic radiation in the atmosphere in the above-mentioned range of frequencies is significant and depends on the presence of water (in its three states: liquid, solid or vapour).

Due to the phenomenon of electromagnetic wave scattering, the power of the radio signal at each receiver randomly varies over time, so that power fluctuations can be observed over time.

The power value of the radio signal received by one or more receivers (fixed and/or mobile) is thus the result of the combination of the phenomenon of scattering and the phenomenon of electromagnetic wave absorption along the path between the emitter of the mobile radio network and each receiver depending on the characteristics of the atmosphere.

The technical concept at the basis of the present invention is to measure the fluctuations in the power of the radio signal received by each receiver (i.e. the variations in the power of the radio signal over time) and, on the basis of the values of that power, to determine the presence of meteorological precipitations along the path between the emitter of the mobile radio network and each receiver, by means of a surface precipitation index.

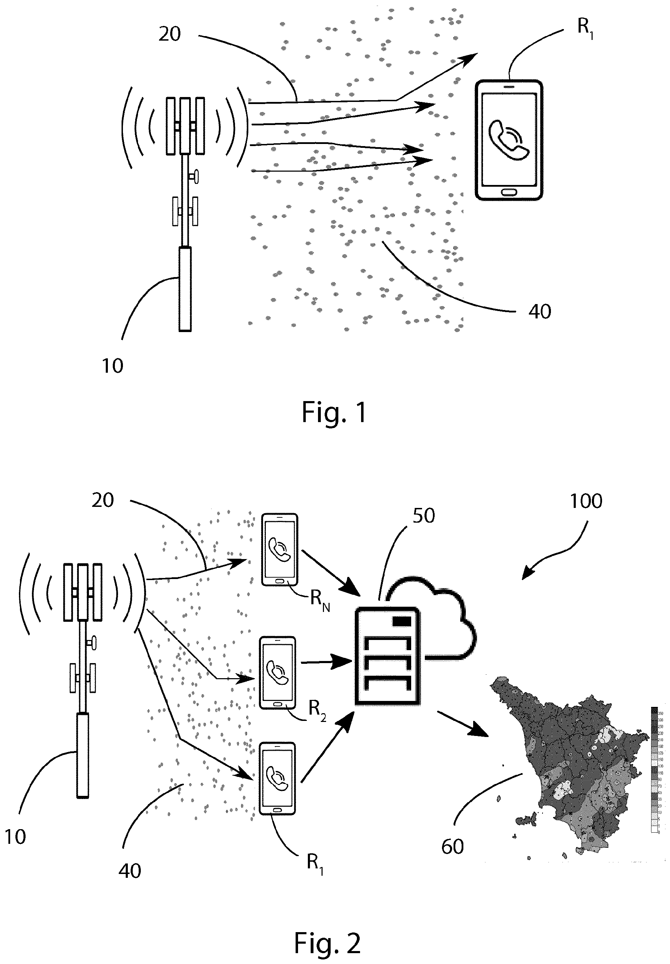

The physical principle of this technical concept applied to the measurement of said index according to the invention is described with reference to Figure 1.

Figure 1 shows an antenna or emitter 10 of a mobile phone network which emits radio signals 20 and a receiver $R_1$, configured to receive said radio signals 20.

Each radio signal 20 emitted by said emitter 10 has a transmission power or transmissive power $I_0$ and a frequency comprised between 0.5 and 5 GHz.

In figure 1, said receiver $R_1$ is a mobile receiver and consists of a mobile phone.

Although only one receiver is shown in figure 1, as noted further below it is possible, according to the invention, to provide a plurality of receivers $R_1, R_2 ... R_N$ (said plurality of receivers can comprise a plurality of fixed receivers or a plurality of mobile receivers or comprise at least one fixed receiver and at least one mobile receiver), each of which is configured to receive the radio signals 20 emitted by said emitter 10, without going outside the scope of invention.

Said radio signals 20 are propagated in the atmosphere 40 and are scattered by said atmosphere 40, in particular by the raindrops present in the atmosphere.

Consequently, the power $I_R$ received by said receiver $R_1$ is a power that is attenuated compared to the transmissive power $I_0$, due to the fact that the radio signal 20 is propagated in the atmosphere 40.

The present invention is based on the possibility of measuring a surface precipitation index on the basis of the fluctuations, over time, in the power of the radio signal used in mobile telephone radio transmissions.

The innovative aspect of the present invention consists in the use of the radio signal 20 emitted by an emitter 10 of a mobile radio network (backhaul) and received by individual receivers, which can be mobile telecommunication devices, either commercial ones (such as mobile phones or similar electronic devices) or ones assembled according to the needs.

For the transmission of said radio signal 20, use is typically made of frequencies of less than 5GHz, at which the coefficient of attenuation due to the presence of raindrops in the atmosphere is sufficiently low (Olsen et al., 1978).

In this case, the measurement of the surface precipitation index is based on the phenomenon of electromagnetic wave scattering, since the phenomenon of electromagnetic wave absorption is negligible.

This is a substantial difference compared to the prior art, in that even if one were to combine the prior art techniques, the frequencies of the radio signals used in the prior art are higher than 5 GHz (usually tens of Gigahertz) and thus the measurement of atmospheric parameters is mainly based on the phenomenon of electromagnetic wave absorption.

**Embodiments**

As may be inferred from the foregoing, due to the phenomenon of electromagnetic wave scattering, the power of the radio signal at each receiver varies randomly over time.

Therefore, the power $I_R$ received by an individual receiver depends on atmospheric parameters, including the presence of rain in the atmosphere.

The system according to the invention does not provide local measurements of atmospheric parameters in a given point.

On the contrary, each receiver of the system described in the present invention provides measurements which depend on the phenomenon of absorption and/or the phenomenon of scattering to which the radio signal is subject along the path between the emitter 10 of the mobile radio network and each receiver.

The present invention is based on the possibility of performing, preferably, a large number of measurements, thanks to a plurality of receivers, in particular mobile receivers (such as, for example, mobile phones), distributed over an area of interest of the earth's surface, in order to obtain indexes of surface meteorological precipitations.

By means of said indexes of surface meteorological precipitations it is possible to obtain a map of meteorological precipitations or rainfall map.

Advantageously, said rainfall map can be used for research purposes, for meteorological purposes, for the purpose of issuing weather alerts, establishing the level of humidity in agricultural zones, supporting navigation and the movement of vehicles and/or aircraft, or in order to certify weather events that have produced damage.

The system according to the invention comprises:

a) one or more receivers, for example mobile telecommunication devices used in the mobile telephony sector;
b) the software run by the receiver in order to measure the received power of the radio signal transmitted by an emitter of a mobile radio network and transmit data to a processing centre or central server;
c) the method (implemented by means of the central server mentioned further below) for discriminating the variation in the received power of the radio signal due to the propagation of said radio signal in the atmosphere;
d) a central server capable of acquiring and processing data coming from each receiver and determining the surface precipitation index, in which the method as per c) is implemented.

The receivers can be fixed receivers, i.e. located in an area of the earth's surface in a predetermined position, or mobile receivers, i.e. mobile telecommunication devices capable of receiving the signal by means of the antenna with which they are equipped (for example mobile phones, smartphones, etc.).

In the event of a plurality of receivers, some receivers can be fixed receivers and other receivers can be mobile receivers.

One novelty of the invention lies:

• in the use of already existing mobile telecommunication devices (mobile phones and smartphones) for purposes other than the ones for which they were built;
• in the use of frequencies presently not used for the measurement of the surface precipitation index;
• in the use of a central server for receiving and processing data.

With reference to figure 2, the method for determining the presence of meteorological precipitations comprises the following steps:

A. acquiring in predetermined instants of time $t_K$, with k=1,...,M, where M is a positive integer, via one or more fixed and/or mobile receivers $R_1,R_2...R_N$, the power $I_R$ of a radio signal 20 emitted into the atmosphere 40 by an emitter 10 of a mobile radio network, wherein said radio signal 20 emitted by said emitter 10 has a frequency comprised between 0.5 and 5GHz and a transmitted power $I_0$, so as to obtain, for each receiver $R_1,R_2...R_N$, a respective sequence of received power values $I_{R11}$, $I_{R12...}I_{R1M}$, $I_{R21}$, $I_{R12...}I_{R1M},...I_{RN1}$, $I_{RN2...}I_{RNM,}$ wherein said received power is a power that is attenuated by said atmosphere 40 relative to said transmitted power $I_0$;

B. acquiring the data relating to the position of said emitter 10 and the position of said one or more receivers $R_1,R_2...R_N$;

C. acquiring, by means of one or more weather stations, meteorological data relating to the meteorological precipitations over said area in a predetermined first reference time window in the absence of meteorological precipitations, and in a predetermined second reference time window in the presence of meteorological precipitations;

D. sending, via a data network, the data acquired in steps A, B, C to a central server 50;

E. calculating for each receiver $R_1,R_2...R_N$, by means of said central server 50, a respective power threshold value $S_1,S_2...S_N$ on the basis of a respective sequence of reference power values $I_{R110},I_{R120...}I_{R1M0}$, $I_{R210},I_{R220...}I_{R2M0},...I_{RN10},I_{RN20...}I_{RNM0}$, of said radio signal 20 received by said one or more receivers $R_1,R_2...R_N$ in said predetermined first time window;

F. comparing each power threshold value $S_1,S_{2...}S_N$ with the mean value $\overline{I_{R1}}$, $\overline{I_{R2...}}\overline{I_{RN}}$ of a respective sequence of received power values $I_{R11},I_{R12...}I_{R1M}$, $I_{R21},I_{R12...}I_{R1M},...I_{RN1},I_{RN2...}I_{RNM}$ in a predetermined time window;

G. if one or more mean values $\overline{I_{R1'}}$, $\overline{I_{R2...}}$ $\overline{I_{RN}}$ are lower than the respective threshold $S_1,S_{2...}S_N$, calculating, by means of said central server 50, a respective surface precipitation index $p_1$, $p_{2...}p_N$ as a function of said one or more mean values $\overline{I_{R1}}$, $\overline{I_{R2...}}\overline{I_{RN}}$ lower than the respective threshold $S_1,S_2...S_N$ and of said meteorological data acquired in said predetermined second reference time window.

In the embodiment being described, each power threshold value $S_1,S_2...S_N$ is the mean of the values of a respective sequence of reference power values $I_{R110},I_{R120...}I_{R1M0}$, $I_{R210},I_{R220...}I_{R2M0},...I_{RN10},I_{RN20...}I_{RNM0}$.

In one alternative, each power threshold value $S_1,S_2...S_N$ is the mean of the values of a respective sequence of reference power values $I_{R110},I_{R120...}I_{R1M0}$, $I_{R210},I_{R220...}I_{R2M0},...I_{RN10},I_{RN20...}I_{RNM0}$, minus a respective predetermined error.

In this alternative, each predetermined error can coincide with the standard deviation of a respective sequence of reference power values.

Figure 2 shows a system 100 for determining meteorological precipitations in an area of the earth's surface.

The system for determining the presence of meteorological precipitations comprises:

- a processing unit 50,
- one or more fixed and/or mobile receivers $R_1,R_2...R_N$, each of which is configured to:

  ∘ receive said radio signal 20,
  ∘ determine the power $I_R$ received by each receiver $R_1,R_2...R_N$, where said received power is a power that is attenuated compared to the transmitted power $I_0$ of the radio signal 20 emitted by the emitter 10 of a mobile radio network;
  ∘ send the values of said received power $I_R$ to said processing unit 50,

- one or more weather stations (not shown), each of which is configured to:

  ∘ acquire meteorological data relating to said area,
  ∘ send said meteorological data to said processing unit 50.

In particular, each receiver $R_1,R_2...R_N$ has an installed computer program configured to determine the received power $I_R$ of said radio signal 20 and send the value of said received power $I_R$ to said central server 50, together with position data in the event that the receiver is mobile.

Said processing unit 50 has an installed computer program for performing steps E to G of the method.

In the embodiment being described, said processing unit 50 is a central server.

Each receiver $R_1,R_2...R_N$, receives the radio signal 20 emitted by the emitter 10 of the mobile radio network in space after said radio signal has been propagated in the atmosphere 40, and sends the value of the received power of said radio signal to said central server 50, optionally to a cloud, which uses it according to the method of the invention to compute a map 60 of meteorological precipitations or rainfall map.

### Description of the method of the invention

The signal emitted by the emitter 10 of a mobile radio network has a frequency comprised between 0.5 and 5 GHz and a transmission power $I_0$ that is not known a priori.

Each receiver $R_1,R_2...R_N$ receives the radio signal 20, wherein the received power $I_R$ is a power that is attenuated compared to the transmission power $I_0$.

In the presence of a disturbance in the atmospheric medium 40, such as, for example, a rainfall field, the radio signal received by each receiver $R_1, R_2...R_N$ undergoes frequent fluctuations over time, with a consequent attenuation of the power of the radio signal received by each receiver.

From the values of the powers of the radio signal received by each receiver, it is possible to derive a surface precipitation index which refers to an area of the earth's surface present between the emitter 10 of the mobile radio network and each receiver.

Using predetermined reference time windows with a sufficiently long duration (greater than or equal to three days, preferably 7 days), it is possible to distinguish between intervals of time characterised by a clear atmosphere (i.e. absence of meteorological precipitations, where the radio signal received has not been affected by scattering phenomena connected with rainfall) and intervals of time characterised by fluctuations in the power of the radio signal caused by the presence of rainfall (i.e. presence of meteorological precipitations).

The power of the radio signal 20 received by each receiver is acquired with a high temporal frequency (at time intervals of less than one minute at least) so that the fluctuations in the power of the radio signal may be observed.

This method provides for a first calibration step, in which the powers of the radio signals received by each individual receiver $R_1, R_2...R_N$ are taken into consideration and for each receiver a calculation is made of the mean value of the received power for a predetermined first reference time window in the absence of meteorological precipitations (greater than or equal to 2 days, preferably 5 days).

Said mean value is used as the power threshold value for discriminating the absence or presence of meteorological precipitations.

The rainfall intensity, due to the presence of rain in the atmosphere 40, is subsequently determined by calculating the mean value of the power of the radio signal 20 received by each receiver over a predetermined time window that is sufficiently long relative to the frequency of the variations in the power of the radio signal (for example, greater than or equal to six hours, preferably 24 hours).

If the received power values are lower than said mean value, a meteorological precipitation is taking place.

If the received power values are equal to or greater than that mean, meteorological precipitation is to be considered absent.

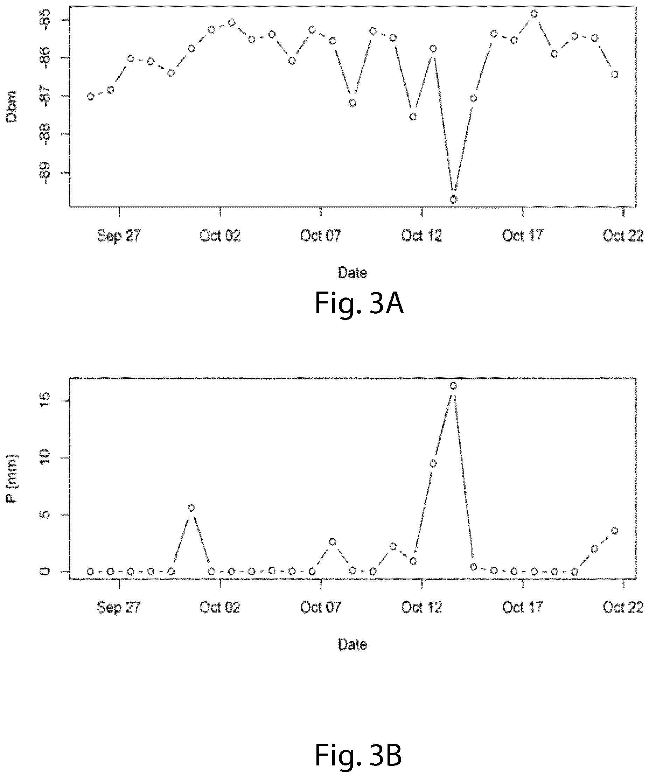

Figure 3A is a graph from which it may be seen how the mean value of the power received by a receiver varies over time in the presence of rainfall in the space between the emitter 10 of the mobile radio network and a receiver.

Making reference to the example in Figure 3A, the radio signal has a mean power value around the value -86.5Dbm.

Figure 3B is a graph from which it may be seen how the rainfall intensity (i.e. the amount of rainfall expressed in millimetres) varies over time.

The rainfall intensity values are obtained by using rain gauges or other technical means to obtain a reference measurement (for example a satellite estimate).

The lowest mean power values are associated with meteorological precipitations, as illustrated by Figure 3B.

In particular, from a comparison with figure 3A, it may be seen that the meteorological precipitations on the days 8, 11 and 13 October are associated with a decrease in the mean value of the power of the radio signal received by a receiver from the system.

In addition to the mean value as an example for determining the power threshold value it is possible to use a power threshold value given by an interval of uncertainty around the mean value.

For example, said interval of uncertainty can be the value of the respective standard deviation of the powers received by each receiver or a multiple of said standard deviation.

In such a case, the mean value plus or minus a standard deviation can be assumed as the power threshold value and events associated with a received power value less than the threshold value can be considered meteorological precipitations or rainfall.

By means of said central server 50, a respective surface precipitation index $p_1, p_{2...}p_N$ is calculated as a function of said one or more mean values $\overline{I_{R1}}, \overline{I_{R2}}...\overline{I_{RN}}$, when said mean values are lower than the respective threshold $S_1, S_{2...}S_N$, and as a function of said meteorological data, where said meteorological data are acquired during a second calibration step in a predetermined second reference time window in the presence of meteorological precipitations (greater than or equal to 2 days, preferably 5 days).

A measurement of rainfall intensity can be derived, for example, but not exclusively, by means of a linear or logarithmic relation between rainfall intensity and the mean value of the power $I_R$ received by each receiver (i.e. the power attenuated by the atmospheric medium 40) in said predetermined time window according to one of the following formulas:

$$p = \alpha * \overline{I_R} + \beta \text{ or } p = \gamma * \log(\overline{I_R}) + \delta$$

where:

- p is the surface precipitation index;
- $\alpha, \beta$, are respectively a first empirical parameter and a second empirical parameter, obtained from a linear regression between the meteorological data acquired (during said second calibration step) in said predetermined second reference time window and the mean value $\overline{I_{R1}}'$, $\overline{I_{R2}}'$ ...$\overline{I_{RN}}'$ of a respective sequence of received power values $I_{R11}'$, $I_{R12}'$... $I_{R1M}'$, $I_{R21}'$, $I_{R12}'$...$I_{R1M}'$,...$I_{RN1}'$, $I_{RN2}'$...$I_{RNM}'$, acquired in said predetermined second reference time window;

• $\gamma$, $\delta$ are respectively a third empirical parameter and a fourth empirical parameter, obtained from a linear regression between the logarithm of the meteorological data acquired (during said second calibration step) in said predetermined second reference time window and the mean value $\overline{I_{R1}}'$, $\overline{I_{R2}}'$ ... $\overline{I_{RN}}'$ of a respective sequence of received power values $I_{R11}'$,$I_{R12}'$...$I_{R1M}'$, $I_{R21}'$,$I_{R12}'$...$I_{R1M}'$,...$I_{RN1}'$ $I_{RN2}'$...$I_{RNM}'$ acquired in said predetermined second reference time window.

With reference to first formula, it follows that:

for the first receiver $R_1$

$$p_1 = \alpha_1 * \overline{I_{R1}} + \beta_1$$

for the second receiver $R_2$

$$p_2 = \alpha_2 * \overline{I_{R2}} + \beta_2$$

....

for the nth receiver $R_N$

$$p_N = \alpha_N * \overline{I_{RN}} + \beta_N.$$

With reference to the following formula, it follows that:

for the first receiver $R_1$

$$p_1 = \gamma_1 * \log(\overline{I_{R1}}) + \delta_1$$

for the second receiver $R_2$

$$p_2 = \gamma_2 * \log(\overline{I_{R2}}) + \delta_2$$

...

for the nth receiver $R_N$

$$p_N = \gamma_N * \log(\overline{I_{RN}}) + \delta_N.$$

In general, in order to calibrate meteorological data (i.e. the meteorological data acquired over each predetermined reference time window) it is necessary to have independent measurements on meteorological precipitations from one or more weather stations located in the area of the earth's surface that is of interest and in proximity thereto (wherein a meteorological station may comprise at least a rain gauge, and/or at least a satellite and/or at least a radar, etc.).

In particular, during the second calibration step, the values of each pair of empirical parameters $\alpha$, $\beta$ and $\gamma$, $\delta$ are determined by means of the respective linear regressions indicated above, wherein the values of the surface precipitation index obtained from the meteorological data acquired from said one or more weather stations in said predetermined second reference window, and the mean value $\overline{I_{R1}}'$, $\overline{I_{R2}}'$ ...$\overline{I_{RN}}'$ of a respective sequence of received power values $I_{R11}'$, $I_{R12}'$...$I_{R1M}'$, $I_{R21}'$, $I_{R12}'$...$I_{R1M}'$,...$I_{RN1}'$, $I_{RN2}'$...$I_{RNM}'$ acquired in said predetermined second reference time window are known.

On the basis of the values of the empirical parameters obtained in the second calibration step, it is subsequently possible to determine the surface precipitation index without the need to acquire the meteorological data from the weather stations on each occasion.

By means of this calibration measurement, which can be made initially, it is possible to decrease the uncertainty regarding the value of the surface precipitation index estimated with the present method.

The choice between the linear formulation and the logarithmic formulation depends on local factors to be evaluated on each occasion on the basis of the analysis of the linear regression between the meteorological data acquired in said predetermined second reference time window and the mean value of the power $\overline{I_{R1}}$, $\overline{I_{R2}}$ ... $\overline{I_{RN}}$ received by a respective receiver or the linear regression between the logarithm of the meteorological data acquired in said predetermined second reference time window and the mean value of the power $\overline{I_{R1}}$, $\overline{I_{R2}}$ ... $\overline{I_{RN}}$ received by a respective receiver.

This method can be adopted both for sampling the rainfall field in the presence of a network of receivers located in known positions, and via receivers which can be mobile telecommunication devices (the position of each mobile telecommunication device being identified through known means, e.g. locating systems like GPS).

Moreover, the method can be used both for liquid rain and solid precipitation (snow and hail).

In the case of mobile receivers (i.e. mobile telecommunication devices in movement), the mean value of the received power is calculated over a predetermined time window that is sufficiently long (for example a number of hours greater than or equal to 6 hours, preferably 24 hours) and considering all the receivers located within zones that are sufficiently small relative to the territorial cell covered by the emitter 10.

For example, each zone can have an extent of less than 1000m$^2$).

In fact, since the receivers are mobile, it must be ascertained not only that the measurement of the mobile receiver is acquired for a sufficiently long period, but also that each mobile receiver remains within the same territorial cell.

A possible, but not exclusive, application of this technique based on the use of mobile receivers (for example made up of mobile telecommunication devices for mobile telephony) regards the observation of a rainfall field in urban areas through the use of the radio signal acquired by said mobile receivers.

**Example of measurement**

As an example of possible operation, the measurement of the intensity of precipitation is described below.

By maintaining the fixed receiver in one point and detecting, for a sufficiently long period of time (more than one day), the intensity of the radio signal coming from the surrounding transmitters (one or more), it is possible to discriminate the atmospheric parameters by observing the variations in the received power (figures 3A and 3B).

The example was obtained using an antenna capable of receiving signals from the mobile network and the comparative data (figure 3B) was detected using a rain gauge, whose routine maintenance is overseen by a centre specialised in the observation of weather data.

As can be seen, there is a clear decrease in the power of the signal corresponding to a meteorological precipitation.

**Inventive step and differences compared to the prior art**

The person skilled in the art who finds himself facing this problem has the following difficulties:

1) the radio signal received by the receivers is weakly influenced by the presence of rainfall, so much so that it is mistaken for noise.
2) Since the attenuation caused by raindrops in the atmosphere is negligible in the 0.5 - 5GHz frequency range, the person skilled in the art would not take into consideration the attenuation of the radio signal in said frequency range, but would rather consider the attenuation at frequencies above 20GHz, since at such frequencies the phenomenon of absorption of the radio signal by raindrops provokes a significant attenuation of the power of the radio signal received by the receivers.
3) In the frequency range 0.5 - 5GHz, the scattering of the radio signal brings about, over time, random variations in the power of the radio signal received by receivers, which would usually be considered by the person skilled in the art as noise or disturbance of the radio signal. The method according to the invention makes it possible to measure a surface precipitation index by using the mean power value of the radio signal received by each receiver whose attenuation is due to the phenomenon of scattering to which the radio signal is subject along the path between the emitter 10 of the mobile radio network and each receiver.

**Possible applications**

The applications of such results and of such a technique are numerous:

1) Meteorology: from a strictly meteorological standpoint, the measurement of rainfall is usually a measurement of a point-based type (i.e. for each point or limited area of the earth's surface). In other words, there are weather stations that measure rainfall in a particular point of said area of the earth's surface. This method makes it possible to have a three-dimensional map of the precipitation field and know any variations relative to the individual point. The only instrument used which provides similar results is weather radar, which, besides having considerable dimensions, has high installation and maintenance costs.
2) Measurement of rainfall in developing countries. In Europe, there is a high density of weather stations for providing useful information. Unlike in Europe, in developing countries there is a lower density of weather stations due to their cost. Said invention enables the existing network of weather stations to be supplemented with a sufficiently accurate low-cost method.
3) Insurance. In the insurance industry it is often necessary to know the spatial distribution of rainfall in an accurate manner in order to estimate the damage caused by flooding, hail or excessive rainfall. Said tools provide a non-falsifiable low-cost method for obtaining such information.
4) Civil Protection. The data and maps obtained from this method can be used by civil protection authorities to alert the population in the event of heavy rainfall and heat waves.
5) Climatological and meteorological research. In the field of research, precipitation maps are extremely important for a thorough understanding of the physical processes associated with the spatial distribution of precipitation.
6) Snow and ice. Said method makes it possible to have detailed information about precipitation in the form of both rain and snow or ice in orographically complex areas.
7) Driving or piloting of vehicles, watercrafts and aircrafts. Precipitation maps with high spatial resolution, as is obtainable from this invention, can be used for automobile, naval (in proximity to ports where a GSM signal exists) and air (at relatively low altitudes and in proximity to GSM-covered areas) safety.

## References

Chwala, C., Gmeiner, A., Qiu, W., Hipp, S., Nienaber, D., Siart, U., Eibert, T., Pohl, M., Seltmann, J., Fritz, J., and Kunstmann, H.: Precipitation observation using microwave backhaul links in the alpine and pre-alpine region of Southern Germany, Hydrol. Earth Syst. Sci., 16, 2647-2661, doi:10.5194/hess-16-2647-2012, 2012.

Kokhanovsky, A., Breon, F., Cacciari, A., Carboni, E., Diner, D., of Nicolantonio, W., Grainger, R., Grey, W., Höller, R., Lee, K., et al. (2007). Aerosol remote sensing over land: a comparison of satellite retrievals using different algorithms and instruments. Atmospheric Research, 85(3-4), 372-394.

Leijnse H., R. Uijlenhoet, J. N. M. Stricker. (2007) Rainfall measurement using radio links from cellular communication networks. Water Resources Research 43:3

Olsen, R.L., Rogers, D.V., and Hodge, D.B. (1978), The aRb Relation in the Calculation of Rain. Attenuation, IEEE Transactions on Antennas and Propagation, AP-26, 1978, pp. 318-329.

Overeem A., H. Leijnse, R. Uijlenhoet. (2011) Measuring urban rainfall using microwave links from commercial cellular communication networks. Water Resources Research 47:12.

Rayitsfeld A., Rana Samuels, Artem Zinevich, Uri Hadar, Pinhas Alpert. (2012) Comparison of two methodologies for long term rainfall monitoring using a commercial microwave communication system. Atmospheric Research 104-105, 119-127.

## Claims

1. A method for determining the presence of meteorological precipitations in an area of the earth's surface, comprising the following steps:

   A. acquiring in predetermined instants of time $t_K$, with k=1,...,M, where M is a positive integer, via one or more fixed and/or mobile receivers $(R_1,R_2...R_N)$, the power $I_R$ of a radio signal (20) emitted into the atmosphere (40) by an emitter (10) of a mobile radio network, wherein said radio signal (20) emitted by said emitter (10) has a frequency comprised between 0.5 and 5 GHz and a transmitted power $I_0$, such as to obtain, for each receiver $(R_1,R_2...R_N)$, a respective sequence of received power values $I_{R11}$, $I_{R12...}I_{R1M}$, $I_{R21,}$ $I_{R12...}I_{R1M}...I_{RN1}$, $I_{RN2...}I_{RNM}$; said received power $I_R$ being a power attenuated by said atmosphere relative to said transmitted power $I_0$,

   B. acquiring the data relating to the position of said emitter (10) and the position of said one or more receivers $(R_1,R_2...R_N)$;

   C. acquiring, by means of one or more weather stations, meteorological data relating to the meteorological precipitations over said area in a predetermined first reference time window in the absence of meteorological precipitations and in a predetermined second reference time window in the presence of meteorological precipitations;

   D. sending, via a data network, the data acquired in steps A, B, C to a processing unit (50);

   E. calculating for each receiver $(R_1,R_2...R_N)$, by means of said processing unit (50), a respective power threshold value $S_1,S_{2...}S_N$ on the basis of a respective sequence of reference power values $I_{R110,}I_{R120...}I_{R1M0,}$ $I_{R210,}I_{R220...}I_{R2M0,}...I_{RN10,}I_{RN20...}I_{RNM0}$ of said radio signal (20) received by said one or more receivers $(R_1,R_2...R_N)$ in said predetermined first reference time window,

   F. comparing each threshold value $S_1,S_{2...}S_N$ with the mean value $\overline{I_{R1}}, \overline{I_{R2}} ... \overline{I_{RN}}$ of a respective sequence of received power values $I_{R11}$, $I_{R12...}$ $I_{R1M}$, $I_{R21}$, $I_{R12...}I_{R1M}...I_{RN1}$, $I_{RN2...}I_{RNM}$ in a predetermined time window,

   G. if one or more mean values $\overline{I_{R1,}} \overline{I_{R2...}}\overline{I_{RN}}$ are lower than the respective threshold $S_1,S_{2...}S_N$, calculating, by means of said processing unit (50), a respective surface precipitation index $p_1$, $p_{2...}p_N$ as a function of said one or more mean values $\overline{I_{R1,}} \overline{I_{R2} ...} \overline{I_{RN}}$ lower than the respective threshold $S_1,S_2...S_N$ and of said meteorological data acquired in said predetermined second reference time window.

2. The method according to claim 1, **characterised in that** each power threshold value $S_1,S_{2...} S_N$ is the mean value $\overline{I_{R10,}} \overline{I_{R20} ...} \overline{I_{RN0}}$ of the values of a respective sequence of reference power values $I_{R110,}I_{R120...}I_{R1M0,}$ $I_{R210,}I_{R220...}I_{R2M0,}...I_{RN10,}I_{RN20...}I_{RNM0}.$

3. The method according to claim 1, **characterised in that** each power threshold value $S_1,S_{2...}S_N$ is the mean value $\overline{I_{R10,}I_{R20}} ... \overline{I_{RN0}}$ of the values of a respective sequence of reference power values $I_{R110,}I_{R120...}I_{R1M0,}$ $I_{R210,}I_{R220...}I_{R2M0,}...I_{RN10,}I_{RN20...}I_{RNM0}$ plus or minus a respective predetermined error; each predetermined error preferably being the standard deviation of a respective sequence of reference power values $I_{R110,}I_{R120...}I_{R1M0,}$ $I_{R210,}I_{R220...}I_{R2M0,}...I_{RN10,}I_{RN20...}I_{RNM0}.$

**4.** The method according to any one of claims 1 to 3, **characterised in that** each surface precipitation index $p_1$, $p_{2...}p_N$ is calculated according to the expression:

$$p = \alpha * \overline{I_R} + \beta \ \text{or} \ p = \gamma * \log(\overline{I_R}) + \delta$$

where

$\alpha$, $\beta$, are respectively a first empirical parameter and a second empirical parameter, obtained from a linear regression between the meteorological data acquired in said predetermined second reference time window and the mean value $\overline{I_{R1}}$, $\overline{I_{R2}}$ ...$\overline{I_{RN}}$ of a respective sequence of received power values $I_{R11}',I_{R12}'...I_{R1M}'$, $I_{R21}',I_{R12}'...I_{R1M}',...I_{RN1}'$, $I_{RN2}'...I_{RNM}'$, acquired in said predetermined second reference time window;

$\gamma$ and $\delta$ are respectively a third empirical parameter and a fourth empirical parameter, obtained from a linear regression between the logarithm of the meteorological data acquired in said predetermined second reference time window and the mean value $\overline{I_{R1}}'$, $\overline{I_{R2}}'$ ...$\overline{I_{RN}}'$ of a respective sequence of received power values $I_{R11}'$, $I_{R12}'...I_{R1M}'$, $I_{R21}'$, $I_{R12}'...I_{R1M}',...I_{RN1}'$, $I_{RN2}'...I_{RNM}'$ acquired in said predetermined second reference time window;

so that

for a first receiver ($R_1$)

$$p_1 = \alpha_1 * \overline{I_{R1}} + \beta_1$$

for a second receiver ($R_2$)

$$p_2 = \alpha_2 * \overline{I_{R2}} + \beta_2$$

for the nth receiver ($R_N$)

$$p_N = \alpha_N * \overline{I_{RN}} + \beta_N$$

or

for a first receiver ($R_1$)

$$p_1 = \gamma_1 * \log(\overline{I_{R1}}) + \delta_1$$

for a second receiver ($R_2$)

$$p_2 = \gamma_2 * \log(\overline{I_{R2}}) + \delta_2$$

...

for the nth receiver ($R_N$)

$$p_N = \gamma_N * \log(\overline{I_{RN}}) + \delta_N.$$

**5.** The method according to any one of claims 1 to 4, **characterised in that** the data of steps A to C are acquired by a plurality of mobile receivers ($R_1,R_2...R_N$) and by said one or more weather stations, located in a zone with an extent of less than 1000 m$^2$.

**6.** The method according to any one of the preceding claims, **characterised in that** said predetermined first reference time window and said predetermined second reference time window have, respectively, a duration greater than or equal to 2 days, preferably 5 days.

**7.** The method according to any one of the preceding claims, **characterised in that** said predetermined time window has a duration greater than or equal to 6 hours, preferably 24 hours.

**8.** The method according to any one of the preceding claims, **characterised in that**, with reference to step A, the time interval between an instant $t_K$ and a subsequent instant of time $t_{K+1}$ is less than 5 minutes, preferably less than 1 minute.

**9.** The method according to any one of the preceding claims, **characterised in that** said processing unit (50) is configured to compute a map (60) of meteorological precipitations on the basis of the values of the surface precipitation indexes $p_1$, $p_{2...}p_N$ calculated in step G and on the basis of the position data acquired in step B.

**10.** The method according to any one of the preceding claims, **characterised in that** the frequency of said radio signal is comprised between 0.5 and 2.5 GHz.

**11.** A computer program, comprising code means configured in such a way that, when run on a computer, they perform steps E to G of the method according to any one of the preceding claims.

**12.** A system (100) for determining the presence of meteorological precipitations in an area of the earth's surface, comprising:

- a processing unit (50),
- one or more fixed and/or mobile receivers ($R_1,R_2...R_N$), each of which is configured to:

o receive a radio signal (20) emitted into the atmosphere (40) by an emitter (10) of a mobile radio network; said radio signal (20) being emitted by said emitter (10) with a frequency comprised between 0.5 and 5GHz and a transmitted power $I_0$,

o determine a respective power $I_R$ received by each receiver $(R_1, R_2...R_N)$, wherein each received power $I_R$ is a power that is attenuated compared to said transmitted power $I_0$,

o communicate with said processing unit (50),

- one or more weather stations, each of which is configured to acquire meteorological data relating to said area and to send said data to said processing unit (50);

wherein:

- each receiver $(R_1, R_2...R_N)$ is configured to:

o acquire the received power $I_R$ of said radio signal (20) and
o send the values of said received power to said processing unit (50), together with position data of each receiver $(R_1, R_2...R_N)$;

- said processing unit (50) is configured to perform steps E to G of the method according to any one of claims 1 to 10.

Fig. 1

Fig. 2

Fig. 3A

Fig. 3B

Europäisches
Patentamt

European
Patent Office

Office européen
des brevets

## EUROPEAN SEARCH REPORT

Application Number

EP 18 17 1608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 656 163 A (UNIV PLA SCIENCE & TECHNOLOGY) 27 May 2015 (2015-05-27) * paragraph [0002] - paragraph [0082]; figure 2 * | 1-12 | INV. G01W1/02 |
| X | EP 2 688 223 A1 (UNIV DEGLI STUDI GENOVA [IT]; DARTS ENGINEERING SRL [IT]) 22 January 2014 (2014-01-22) * paragraph [0032] - paragraph [0075]; figures 1-2 * | 1-12 | |
| X | WO 2013/124853 A1 (UNIV RAMOT [IL]) 29 August 2013 (2013-08-29) * page 7, line 25 - page 14, line 11; figures 1-2 * | 1-12 | |

TECHNICAL FIELDS
SEARCHED      (IPC)

G01W

The present search report has been drawn up for all claims

| Place of search | Date of completion of the search | Examiner |
|---|---|---|
| The Hague | 5 September 2018 | Franche, Vincent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 17 1608

This annex lists the patent family members relating to the patent documents cited in  the above-mentioned European search report.
The members are as contained in the European Patent Office EDP file on
The European Patent Office is in no way liable for these particulars which are merely given for the purpose of information.

05-09-2018

| Patent document cited in search report | | Publication date | Patent family member(s) | Publication date |
|---|---|---|---|---|
| CN 104656163 | A | 27-05-2015 | NONE | |
| EP 2688223 | A1 | 22-01-2014 | NONE | |
| WO 2013124853 | A1 | 29-08-2013 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHWALA, C. ; GMEINER, A. ; QIU, W. ; HIPP, S. ; NIENABER, D. ; SIART, U. ; EIBERT, T. ; POHL, M. ; SELTMANN, J. ; FRITZ, J.** Precipitation observation using microwave backhaul links in the alpine and pre-alpine region of Southern Germany. *Hydrol. Earth Syst. Sci.,* 2012, vol. 16, 2647-2661
- **KOKHANOVSKY, A. ; BREON, F. ; CACCIARI, A. ; CARBONI, E. ; DINER, D. ; NICOLANTONIO, W. ; GRAINGER, R. ; GREY, W. ; HÖLLER, R. ; LEE, K. et al.** Aerosol remote sensing over land: a comparison of satellite retrievals using different algorithms and instruments. *Atmospheric Research,* 2007, vol. 85 (3-4), 372-394
- **LEIJNSE H. ; R. UIJLENHOET ; J. N. M. STRICKER.** Rainfall measurement using radio links from cellular communication networks. *Water Resources Research,* 2007, vol. 43 (3

- **OLSEN, R.L. ; ROGERS, D.V. ; HODGE, D.B.** The aRb Relation in the Calculation of Rain. Attenuation. *IEEE Transactions on Antennas and Propagation,* 1978, vol. AP-26, 318-329
- **OVEREEM A. ; H. LEIJNSE ; R. UIJLENHOET.** Measuring urban rainfall using microwave links from commercial cellular communication networks. *Water Resources Research,* 2011, vol. 47, 12
- **RAYITSFELD A. ; RANA SAMUELS ; ARTEM ZINEVICH ; URI HADAR ; PINHAS ALPERT.** Comparison of two methodologies for long term rainfall monitoring using a commercial microwave communication system. *Atmospheric Research,* 2012, vol. 104-105, 119-127